# FASCICULE DE BREVET EUROPEEN

(11) **EP 0 378 482 B1**
(45) Date de publication et mention de la délivrance du brevet: **12.04.1995**
(21) Numéro de dépôt: 90400079.1
(22) Date de dépôt: 10.01.1990
(51) Int. Cl.: C10G 35/12, B01J 27/32

(54) **Procédé de régénération d'un catalyseur de production d'hydrocarbures aromatiques ou de réformage**
Verfahren zur Regenerierung eines Katalysators zur Reformierung oder zur Herstellung von aromatischen Kohlenwasserstoffen
Regeneration process of a catalyst for the reforming or for the production of aromatic hydrocarbons

(30) Priorité: 13.01.1989 FR 8900467; 15.06.1989 FR 8908090; 25.08.1989 FR 8911320
(43) Date de publication de la demande: 18.07.1990
(73) Titulaire: INSTITUT FRANCAIS DU PETROLE, 92502 Rueil-Malmaison (FR)
(72) Inventeur: De Bonneville, Jean, F-92500 Rueil-Malmaison (FR); Ham, Pierre, F-78380 Bougival (FR); Macaire, Jean-Claude, F-92000 Nanterre (FR)

(56) Documents cités:
- EP-A- 0 200 474
- EP-A- 0 258 137
- US-A- 3 647 680
- US-A- 3 935 244
- US-A- 4 172 027
- US-A- 4 218 338

## Description

La présente invention concerne un procédé de régénération d'un catalyseur renfermant un support et au moins un métal de la classification périodique des éléments ainsi qu'un certain pourcentage d'un halogène, par exemple de 0,1 à 10 % en poids. La présente invention concerne donc la régénération d'un catalyseur utilisé pour la conversion d'hydrocarbures et notamment d'un catalyseur pour l'hydroreforming (hydroréformage) d'hydrocarbures ou d'un catalyseur pour la production d'hydrocarbures aromatiques, par exemple la production de benzène, de toluène et de xylènes (ortho, méta ou para), soit à partir d'essences insaturées ou non, (par exemple des essences de pyrolyse de craquage en particulier de craquage à la vapeur ou de reformage catalytique), soit encore à partir d'hydrocarbures naphténiques capables par déshydrogénation de se transformer en hydrocarbures aromatiques.

Le catalyseur lorsque une régénération devient nécessaire provient soit d'un réservoir dans lequel il a été accumulé avant que l'on procède à une régénération, soit directement du réacteur où s'est faite la réaction ; ce catalyseur pulvérulent, par exemple en grains ou en extrudés est alors envoyé dans une enceinte de régénération. Une régénération satisfaisante pour la demanderesse et décrite dans USA-4218338 consiste à traiter le catalyseur dans une enceinte où le catalyseur y est traité sous la forme d'un lit fixe ou mobile. Dans cette enceinte, le catalyseur est successivement :
(a) soumis à une combustion à l'aide d'un gaz renfermant de l'oxygène moléculaire ;
(b) soumis à une chloration ou à une oxychloration simultanément au moyen d'un gaz renfermant de l'oxygène moléculaire et au moyen d'un halogène (par exemple le chlore) ou d'un composé halogéné, par exemple un hydracide halogéné ou un halogénure d'alkyle, ou d'un mélange d'halogène et d'un composé halogéné.
(c) soumis à un traitement final à l'aide d'un gaz renfermant une concentration forte d'oxygène moléculaire (calcination).

On peut procéder, à la régénération, de deux façons :
- ou bien en opérant comme dans le brevet de la demanderesse USA-4218338 dans une zone de régénération dans laquelle le catalyseur à régénérer est disposé en lit fixe. Le catalyseur est alors régénéré en lit fixe en trois étapes successives (a), (b) et (c) ;
- ou bien comme dans USA-3,647,680 en opérant dans une zone de régénération dans laquelle le catalyseur à régénérer circule sous la forme d'un lit mobile. Au cours de la descente du catalyseur à l'intérieur de la zone de régénération, le catalyseur passe successivement à travers trois zones distinctes correspondant à chacune des trois étapes (a), (b), (c) du procédé de régénération.

C'est une variante de cette deuxième technique que l'on a cherché à perfectionner ici dans la présente invention, cette variante n'étant possible que si l'on n'utilise pas deux des enseignements de US-A-3647680 à savoir : d'une part le gaz utilisé dans la chloration ou dans l'oxychloration doit contenir une quantité très faible et critique de vapeur d'eau, et d'autre part il ne faut pas utiliser de l'air dans l'étape de calcination mais un gaz inerte renfermant un pourcentage relativement faible d'oxygène, c'est-à-dire un gaz renfermant une teneur en oxygène inférieure à celle que l'on trouve dans l'air (20 %).

Le document EP-A-0 259 137 décrit un procédé de régénération d'un catalyseur d'hydroconversion dans lequel le catalyseur usé est réparti dans au moins deux zones de régénération dans chacune desquelles le catalyseur usé est disposé en lit fixe.

Les conditions détaillées du procédé de chaque étape régénération sont décrites dans le brevet de la demanderesse USA-4,218,338 incorporé ici par voie de référence.
(a) une première étape correspond à la combustion des dépôts de coke. Cette opération est réalisée par l'injection d'oxygène dans un mélange inerte, ce mélange inerte servant de diluant thermique.
(b) une deuxième étape correspond à la chloration ou à l'oxychloration du catalyseur : pour réaliser une oxychloration, on augmente la teneur en oxygène du gaz de régénération admis dans le régénérateur en introduisant simultanément un composé à base de chlore, c'est-à-dire soit du chlore lui-même, soit de l'acide chlorhydrique, soit encore des acides organiques halogénés, un chlorure d'alkyle (ou cycloalkyle), de manière à être capable de former 0,5 à 1,2 % en poids d'un dérivé chloré d'alumine (lorsque l'alumine est le support catalytique) par rapport au catalyseur soumis à la régénération.
(c) une troisième étape finale de régénération correspond à la calcination du catalyseur (calcination) : pour la réaliser, on utilise un gaz sec et contenant une quantité d'oxygène comprise entre 3 et 10 % en volume par rapport aux gaz de régénération admis dans le régénérateur.

Après la troisième étape, le catalyseur est généralement purgé à l'azote, puis mis par exemple sous hydrogène en équilibre de pression avec la zone de réaction dans lequel le catalyseur va être injecté. Mais avant d'être introduit dans un réacteur, ou en tête de réacteur, le catalyseur, en général, est d'abord traité, par un courant d'hydrogène. La sulfuration du catalyseur dans les cas où il peut être nécessaire d'en faire une, pourra être effectuée dans cet espace ou en tête du réacteur lui-même ou dans les diverses conduites de transfert du catalyseur en tête de ce réacteur.

Les divers composés gazeux soutirés de la zone de régénération au cours des étapes de la régénération sont récupérés et traités pour pouvoir être recyclés à nouveau dans la zone de régénération. En effet, on ne peut pas se permettre de ne pas réutiliser ces gaz. On a vu qu'on diluait l'oxygène essentiellement par de l'azote. Or l'azote est un gaz très onéreux. Dans une unité de reformage ou d'aromizing mettant en oeuvre 40 tonnes de catalyseur, la régénération de ces 40 tonnes de catalyseur nécessiterait, si l'on ne réutilisait pas les gaz de régénération, de 6 000 à 10 000 mètres cube normaux par heure d'azote ("normaux signifiant que le volume d'azote est mesuré à pression et température normales) : en recyclant les gaz de régénération, la consommation d'azote frais tombe à environ 80 m³ normaux par heure.

Les divers composés gazeux soutirés de la zone de régénération, sont chauds au moment de leur soutirage et en outre ils renferment du chlore du fait de l'envoi continu de chlore ou d'un composé chloré dans le régénérateur. Il est donc indispensable d'utiliser une boucle de recyclage, avec traitement approprié des produits gazeux soutirés du régénérateur.

De nos jours, dans les procédés de réformage catalytique, on cherche à opérer à des pressions de plus en plus basses, inférieures par exemple à 10 bars et notamment comprises entre 3 et 8 bars ou même encore moins.

Cette baisse de pression s'accompagne en effet d'une augmentation des rendements. L'inconvénient de cette technologie est un dépôt plus rapide de coke sur le catalyseur. Et alors que jusqu'à présent l'on pouvait se contenter de ne régénérer le catalyseur que par exemple tous les 15 jours (cycle de 15 jours pour une circulation complète du catalyseur à travers tous les réacteurs et à travers la zone de régénération), il devient nécessaire, lorsque l'on opère à basse pression d'avoir des cycles de seulement 7 jours et même des cycles de l'ordre de 2 à 3 jours. Ces cycles courts conduisent à divers inconvénients : beaucoup de catalyseur se trouve immobilisé à l'extérieur des réacteurs en attente de régénération : en effet, les capacités de régénération sont aujourd'hui souvent dépassées sur les sites où l'on ne parvient plus à régénérer le catalyseur au fur et à mesure qu'il est soutiré des réacteurs.

On a donc été amené à proposer et à mettre en oeuvre une nouvelle boucle de régénération qui permet de régénérer sans discontinu du catalyseur à une cadence d'environ 1 tonne par heure ou de l'ordre de 25 tonnes par jour. Dans de telles conditions, il y a, à titre d'exemple, environ 5 à 6 tonnes seulement à la fois de catalyseur à la régénération alors que dans l'art antérieur il y en avait environ 22 tonnes à la fois. Il s'ensuit que, dans la présente invention, les capacités de régénération sont beaucoup plus élevées et que l'on peut assurer sans attente la rotation du catalyseur usé vers la régénération, tout en réussissant à régénérer en continu des quantités de catalyseur voisines par exemple de l'ordre de 1 tonne/ heure d'un catalyseur renfermant environ 5 % de coke.

L'une des caractéristiques de l'invention est d'effectuer la régénération à la même pression que celle qui règne dans le premier réacteur traversé par la charge d'hydrocarbures et par le catalyseur frais ou régénéré.

A titre d'exemple, cette pression sera ainsi de l'ordre de 3 à 8 bars de préférence, la pression dans le dernier réacteur traversé par la charge et d'où est soutiré le catalyseur usé étant de l'ordre de 1 à 6 bars, par exemple 3 bars. Il suffit donc d'un sas pour remonter la pression du dernier réacteur à la pression du régénérateur qui, selon l'invention, travaille donc ici sensiblement à la pression du premier réacteur, soit 3 à 8 bars, au lieu de 15 bars environ dans l'art antérieur, voire 40 bars il y a une vingtaine d'années. La régénération proprement dite comporte comme dans l'art antérieur (par exemple le brevet de la demanderesse US-A-4172027) au moins une zone de brûlage du catalyseur, puis une zone d'oxychloration et enfin une zone de calcination.

La boucle de régénération que l'on va décrire ci-après permet d'une part d'utiliser avantageusement la chaleur fournie par la réacteur du brûlage du coke déposé sur le catalyseur, tout en utilisant une partie du gaz pour effectuer une calcination avec un gaz sec (renfermant moins de 50 ppm d'eau) et une oxychloration (humide de préférence) du catalyseur.

Dans la présente invention, le catalyseur à la sortie du dernier réacteur est transporté généralement par un dispositif élévateur (lift) à l'aide par exemple d'azote vers la zone de régénération.

Le régénérateur étant à une pression voisine de celle du premier réacteur, il faut envisager la présence d'un sas.

Le régénérateur est de type réacteur de reformage dans lequel le catalyseur circule par gravité. Le catalyseur est régénéré en continu.

Il traverse successivement 4 zones :
- une première zone de brûlage entre 350 et 450 °C, de préférence entre 380 et 420 °C (et par exemple autour de 400 °C, en présence d'un gaz inerte renfermant 0,01 à 1 %, de préférence de 0,5 à 0,8 % en volume d'oxygène (par exemple 0,6 %) ;
- une deuxième zone de brûlage entre 370 et 480 °C, de préférence entre 450 et 490 °C, (par exemple autour de 470 °C), en présence d'un gaz inerte renfermant 0,01 à 1 %, de préférence 0,2 à 0,4 % d'oxygène en volume (par exemple 0,2 %) ;
Ces deux zones sont en lit mobile radial, lit à faible perte de charge dimensionné suivant les normes des réacteurs existant (une tôle perforée notamment peut assurer une perte de charge DP minimum).
- une zone d'oxychloration fonctionnant entre 350 et 550 °C, de préférence entre 460 et 530 °C (par exemple 500 °C) en présence d'un gaz renfermant 1 à 4 % et de préférence 1,5 à 3,5 % en volume d'oxygène (par exemple 1,9 à 3,1 %), avec un temps de séjour de 30 à 60 minutes, par exemple de l'ordre de 45 minutes ;
- et une zone de calcination fonctionnant entre 350 et 550 °C, de préférence entre 500 et 540 °C par exemple autour de 520 °C, avec un temps de séjour de 45 minutes à 80 minutes (par exemple de l'ordre de 60 minutes).

Les deux zones d'oxychloration et de calcination sont de type à lit axial (fixe ou mobile) à faible perte de charge.

Après calcination, le catalyseur est généralement collecté par 4 ou 8 jambes vers une trémie inférieure balayé à l'azote, les jambes permettent un refroidissement du catalyseur et le gaz (azote) permet de purger le catalyseur.

Un système élévateur permet ensuite de remonter le catalyseur en continu vers une trémie avant de passer dans une zone de réduction à l'hydrogène puis dans le premier réacteur.

L'invention concerne une méthode permettant de régénérer en continu, un catalyseur usé, soutiré également en continu, d'une unité de conversion d'hydrocarbures. Le catalyseur circule par gravité de haut en bas à travers une zone de régénération comportant plusieurs enceintes ; dans chaque enceinte, les conditions opératoires sont différentes parce qu'elles ont chacune une fonction précise permettant ainsi de réaliser une régénération complète du catalyseur dans des conditions voisines de celles que le catalyseur aurait rencontrées dans un régénérateur comportant plusieurs enceintes, comme décrit de l'art antérieur, par exemple dans USP 4133 743 de la demanderesse.

Dans la présente invention, après stockage dans la tête du régénérateur, stockage qui permet le préchauffage de celui-ci par les gaz de régénération, le catalyseur circule dans une première zone annulaire, c'est à dire radiale (à lit mobile) de brûlage, où une élimination partielle du coke a lieu ; le catalyseur descend ensuite dans une deuxième zone annulaire, c'est à dire radiale (à lit mobile) de brûlage pour élimination complète du coke, puis il est collecté et transféré dans un lit mobile axial d'oxychloration par un gaz légèrement humide et chloré avant d'entrer dans la zone de calcination à lit mobile axial où le catalyseur est en contact avec un gaz chaud et sec.

La régénération est effectuée grâce à deux courants distincts d'un même gaz qui sont réunis ensuite après leur utilisation, lavés et recirculés par un même compresseur. Par ailleurs, un compresseur d'air d'appoint permet d'avoir de l'air à une pression suffisante pour introduire cet air, sous contrôle de débit, dans le gaz de calcination.

La méthode selon l'invention englobe :
- le préchauffage du catalyseur sous atmosphère de gaz inerte pour le porter à une température adéquate pour la combustion du coke
- la répartition du catalyseur grâce à une série de tuyauteries qui permettent une bonne alimentation de la première zone annulaire
- le brûlage partiel du coke (de 50 à 90 %) grâce à un débit de gaz de régénération circulant à travers le lit annulaire formée de deux grilles concentriques
- l'élimination complète du coke par le passage du catalyseur dans une deuxième zone annulaire de combustion où le gaz de régénération est le même que celui utilisée dans la zone précédente, chauffée par la chaleur de réaction produite par le brûlage du coke, dans lequel on injecte de l'air pressurisé sous contrôle de débit
- une oxychloration du catalyseur extrait de la précédente zone par un ensemble de tuyauteries alimentant un lit axial co-courant avec un débit contrôlé en % d'oxygène, température, terteur en eau et en agent chlorant
- une calcination du catalyseur dans un lit axial à contre-courant par un débit de gaz séché, mélange de gaz recyclé et d'air comprimé, qui servira ultérieurement dans la zone d'oxychloration.

A l'issue de la régénération, le catalyseur circule ensuite dans une trémie baiayée par du gaz inerte permettant l'élimination des traces d'O₂, trémie qui alimente en continu un pot de remontée du catalyseur par transport pneumatique, pot qui permet un contrôle précis du débit de catalyseur à travers ie ballon de régénération.

Les deux débits de gaz régénération, l'un ayant servi à l'élimination du coke, l'autre à sa calcination puis son oxychloration sont mélangés après récupération de la chaleur, lavés après neutralisation des composés chlorés issus de la régénération et recyclés grâce à un compresseur.

Ainsi l'invention concerne un procédé de régénération d'un catalyseur de réformage ou de production d'hydrocarbures aromatiques en présence d'un catalyseur renfermant un support, au-moins un métal noble de la famille du platine et du chlore, dans au moins deux réacteurs en série à travers lesquels le catalyseur et la charge circulent successivement, la pression dans le premier réacteur traversé par le catalyseur et par la charge étant sous une pression comprise entre 3 à 8 bars, la pression dans le dernier réacteur étant sous une pression comprise entre 2 et 6 bars, le procédé étant caractérisé en ce que le catalyseur usé chemine progressivement de haut en bas dans une enceinte de régénération où il rencontre successivement une première zone à lit mobile et radiale de combustion, une deuxième zone à lit mobile et radiale de combustion, une zone à lit mobile axiale d'oxychloration et une zone à lit mobile axiale de calcination, et en ce que :
(a) dans la première zone de combustion, le catalyseur est traité sous une pression de 3 à 8 bars sensiblement égale à celle qui règne dans ledit premier réacteur, à une température comprise entre 350 et 450 °C par un gaz de combustion à base d'un gaz inerte circulant à co-courant du catalyseur, renfermant 0,01 à 1 % d'oxygène en volume, ce gaz de combustion provenant d'une zone de lavage définie ci-dessous,
(b) dans la deuxième zone de combustion, le catalyseur est traité sous une pression de 3 à 8 bars sensiblement égale à celle qui règne dans ledit premier réacteur à une température supérieure d'au moins 20 °C à la température qui règne dans la première zone de combustion, en présence des gaz en provenance de la première zone de combustion et en présence d'un gaz inerte d'appoint auquel on ajoute jusqu'à 20 % en volume d'oxygène de façon à ce que le catalyseur soit au contact d'un gaz renfermant 0,01 à 1 % d'oxygène en volume, ces gaz circulant à co-courant du catalyseur,
(c) les gaz de brûlage sont évacués de la deuxième zone de brûlage et sont envoyés vers une boucle de lavage après avoir été préalablement mélangés aux gaz soutirés de la zone d'oxychloration et de la zone de calcination,
(d) dans la zone d'oxychloration, le catalyseur est traité à co-courant par un mélange d'un gaz en provenance de la zone de calcination et d'un gaz à base d'un composé choisi dans le groupe constitué par le chlore et les composés chlorés, le dit mélange formant un gaz d'oxychloration renfermant de 4 à 10 % (de préférence 4,5 à 7,5 %) en volume d'oxygène, sous une pression de 3 à 8 bars et à une température comprise entre 350 et 550 °C et les gaz sont évacués de la zone d'oxychloration pour être mélangés comme indiqué précédemment avec les gaz soutirés de la deuxième zone de brûlage, en vue d'atteindre une boucle de lavage commune à tous les effluents gazeux de l'enceinte de régénération,
(e) dans la zone de calcination, le catalyseur est traité entre 350 et 550 °C sous une pression comprise entre 3 et 8 bars, par au moins une partie des gaz en provenance de la boucle de lavage et d'une zone de séchage, avec un appoint éventuel d'air frais et de façon à ce que les gaz introduits dans la zone de calcination renferment de 1 à 10 % d'oxygène en volume (de préférence 4 à 8 %) et ne renferment pas plus de 100 p.p.m de vapeur d'eau
(f) l'autre partie des gaz en provenance de la boucle de lavage étant utilisée dans l'étape (a) comme gaz de combustion (brûlage).

De préférence, on peut opérer au cours de l'étape (a) entre 3 et 8 bars sous une température comprise entre 380 et 420 °C ; au cours de l'étape (b), on peut opérer à une pression comprise entre 3 et 8 bars et à une température supérieure de 60 à 80 °C à la température qui règne dans l'étape (a), c'est à dire dans la première zone de combustion (brûlage), au au cours de chacune des étapes (d) et (e), on peut opérer à une pression comprise entre 3 et 8 bars.

De préférence également, au cours de l'étape (e), la teneur en oxygène en volume est comprise entre 5 et 7 % avec une teneur en eau inférieure à 50 p.p.m. et au cours de l'étape (c) le gaz d'oxychloration renferme 500 à 7 000 p.p.m d'eau et plus particulièrement entre 1 000 et 3 000 p.p.m.

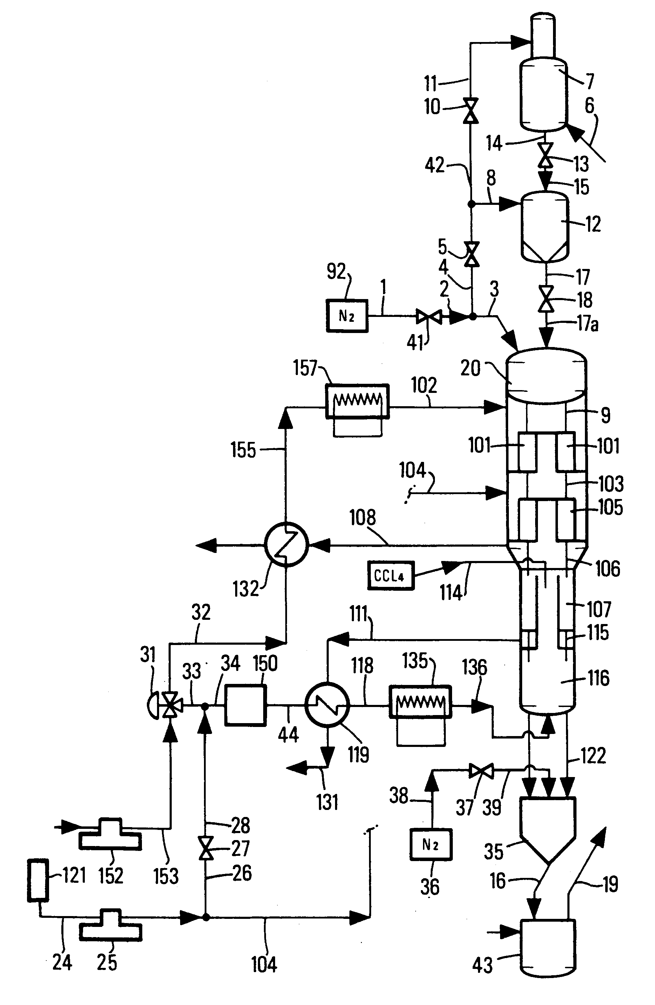

La planche unique illustre l'invention. Le catalyseur usé est soutiré du réacteur de réformage et par la conduite (6) est introduit dans un ballon (7) d'où il est envoyé par les lignes (14) et (15) à travers la vanne (13) vers le ballon stockage (12). Ce cheminement est effectué par exemple avec de l'azote (source (92)) à travers la conduite (1), la vanne (41), la conduite (2), la conduite (4) et la vanne (5). De l'azote atteint le ballon-tampon (12) par la conduite (8) et le ballon (7) par la conduite (42), la vanne (10) et la conduite (11). Le catalyseur atteint ensuite le sommet (20) de l'enceinte de régénération par la conduite (17), la vanne (18) et la conduite (17-a).

Le catalyseur est introduit ensuite par les conduites ou jambes (9) dans une première zone de type annulaire et radiale (101). Dans cette zone à lit mobile de catalyseur (pression par exemple de 5,7 bars), le catalyseur subit un premier brûlage ou combustion à l'aide d'un gaz en général inerte introduit par la conduite (102) qui en outre renferme de l'oxygène (0,6 % à titre d'exemple). La température est par exemple de préférence de 400 à 420 °C ; en fin de cette première étape, à la sortie de la zone (101) de combustion, le catalyseur se trouve à une température nettement plus élevée, de l'ordre de 470 °C par exemple. Les gaz circulent à co-courant du catalyseur. Le catalyseur descend ensuite par les jambes (103) dans une seconde zone (105) annulaire et radiale qui fonctionne à plus haute température que la zone (101), l'apport de chaleur provenant d'ailleurs du catalyseur soutiré de la zone (101). Dans cette zone, le catalyseur subit une deuxième combustion à l'aide des gaz de la première zone de combustion, et à l'aide d'un gaz d'appoint introduit par la conduite (104) qui peut être plus riche en oxygène que le gaz introduit par la conduite (102) dans la zone (101) (de l'air par exemple, comme indiqué sur la figure, fourni à partir de (121) et de la conduite (24), par la pompe ( 25). Dans la deuxième zone de combustion (105), les gaz circulent toujours à co-courant du catalyseur, puis dans la partie inférieure de la deuxième zone de combustion sont soutirés par la conduite (108) vers l'échangeur (132) où ils sont refroidis et communiquent de la chaleur au gaz envoyés par la ligne (155), le four (157) et la conduite (102) vers la première zone de combustion (101). Le catalyseur, soutiré de la deuxième zone de combustion (105) est entraîné ensuite par gravité dans les jambes (106) dans une troisième zone (107) utilisée pour procéder à l'oxychloration du catalyseur. Dans cette zone (107), le catalyseur est disposé sous la forme d'un lit mobile axial. La température est de l'ordre, par exemple, de 500 °C, la chaleur provenant essentiellement de la deuxième zone de combustion (105). Dans la zone d'oxychloration, le catalyseur est mis par exemple à 5,4 bars, en contact à co-courant des gaz en provenance de la zone de calcination définie ci-dessous et également au contact d'un gaz introduit par la conduite (114) renfermant un composé choisi dans le groupe constitué par le chlore et les composés chlorés.

Le mélange ainsi utilisé comme gaz d'oxychloration du catalyseur dans l'enceinte (107) convient particulièrement bien en raison des teneurs faibles et critiques de vapeur d'eau qu'il contient, ce qui n'était pas le cas de l'art antérieur où l'on envoyait dans la zone d'oxychloration les gaz de combustion qui, par suite du brûlage du coke déposé sur le catalyseur, renfermaient des quantités d'eau assez élevées. A l'issue de la réaction d'oxychloration, le catalyseur descend par les jambes (115) dans une zone (116) de calcination, où le catalyseur y est disposé sous la forme d'un lit mobile axial et non plus radial comme dans les deux zones de combustion (101) et (105). La température, à titre d'exemple, dans cette zone (116) de calcination est de 520 °C avec une pression de l'ordre de 5,4 bars. La calcination doit être effectuée en présence de gaz secs ne renfermant de préférence pas plus de 50 p.p.m d'eau. Ces gaz proviennent de la conduite (136), du four (135) ; le four était précédé en amont d'une zone de séchage (150), les gaz ainsi utilisés provenant d'une boucle de lavage des effluents gazeux des quatre zones de l'enceinte de régénération. Les gaz utilisés pour la calcination peuvent avoir reçu un appoint d'air frais en provenance de la conduite (26), de la vanne (27), et de la conduite (28). Ils sont introduits par le fonds de la zone de calcination et circulent ainsi à contrecourant des grains de catalyseur et poursuivent leur chemin, par exemple à travers une cheminée centrale jusqu'au sommet de la zone (107) d'oxychloration en vue de les faire circuler ensuite dans cette zone (107) d'oxychloration (après appoint de composé chloré par la conduite (114)) à co-courant des particules catalytiques.

Le catalyseur calciné est évacué de l'enceinte de régénération par les jambes (122) vers un récipient (35), avec l'aide par exemple d'azote (source (36) cheminant dans les conduites (38) et (39), à travers la valve (37). Par la conduite (16), le catalyseur régénéré est introduit par exemple dans le pot de lift (ou pot de remontée) (43) en vue d'être transporté par la ligne (19) vers le sommet d'un réacteur de réformage.

Comme indiqué plus haut, les effluents gazeux soutirés des 2 zones de combustion sont soutirés par une conduite (108). A la sortie de l'échangeur (132), ils sont entraînés vers une boucle de lavage (décrite ci-après) qu'ils atteindront après avoir été mélangés avec les effluents gazeux soutirés de la zone d'oxychloration et de calcination, ces gaz ayant été soutirés par la conduite (111) de la partie inférieure de la zone d'oxychloration (107). Auparavant les effluents gazeux de la conduite (111) ont traversé l'échangeur (119) pour être refroidis, tout en chauffant dans cet échangeur (119) le gaz introduit dans la zone de calcination par les conduites (44), (118) et (136).

A la sortie de la boucle de lavage, les gaz atteignent le compresseur généralement unique (152) de la boucle de lavage et recyclage, portant la pression des gaz par exemple de 4 à 6,4 bars. Les gaz à leur sortie du compresseur par la ligne (153) sont partagés en deux débits (vanne distributrice (31)). Un premier débit de gaz destiné à la combustion du catalyseur circule par la ligne (32), l'échangeur (132) (destiné à chauffer les gaz secs et lavés par contact indirect avec les effluents gazeux des deux zones de combustion) atteint par la ligne (155), le four (157) et la ligne (102) la première zone de combustion (un appoint d'air peut être fait par la ligne (104)). Un deuxième débit de gaz destiné à la zone de calcination puis à la zone d'oxychloration, circule à partir de la ligne (33) vers le fond de la zone de calcination (116) (un appoint d'air peut être fait par la ligne (28)).

A titre d'exemple supplémentaire, on pourra utiliser les conditions opératoires suivantes :
- 1ère zone de combustion :
   température d'entrée de 400 °c
   gaz de combustion inerte renfermant 0,5 % d'oxygène (en volume)
- 2ème zone de combustion :
   température des gaz : 460 à 470 °C
   % d'oxygène dans les gaz : 0,3 à 0,4 % (en volume)
- zone d'oxychloration
   température des gaz : 500 à 510 °C
   % d'oxygène dans les gaz : 5 à 7 % (en volume)
- zone de calcination
   température des gaz : 510 - 520 °C
   % d'oxygène dans les gaz : 5 à 7 % (en volume).

Un perfectionnement de la présente invention concerne l'utilisation d'une boucle de lavage particulière associée à la redistribution vers les zones de combustion, d'oxychloration et de calcination.

Comme indiqué plus haut, les effluents gazeux soutirés des deux zones de combustion sont soutirés par une conduite (108). A la sortie de l'échangeur (132), ils sont entraînés vers l'aéroréfrigérant d'où ils sont soutirés C'est là que les effluents gazeux de combustion sont mélangés aux effluents gazeux soutirés de la zone d'oxychloration et de calcination, ces gaz ayant été soutirés par la conduite (111) de la partie inférieure de la zone d'oxychloration (107). Auparavant les effluents gazeux de la conduite (111) ont traversé l'échangeur (119) pour être refroidis, tout en chauffant dans cet échangeur (119) le gaz introduit dans la zone de calcination par les conduites (44), (118) et (136).

Une fois réunis, les débits de gaz provenant d'une part des deux zones de combustion et d'autre part des zones de calcination et d'oxychloration sont envoyés (par exemple avec un débit de 5000 kg/h) vers une boucle de lavage qui comporte généralement deux zones. La première zone de lavage est constituée d'un dispositif classique de lavage par exemple d'une colonne avec barbottage des gaz à épurer dans la solution de lavage. Le lavage ici s'effectue par exemple avec une solution aqueuse , de soude ou de la potasse, ou d'un composé équivalent, minéral par exemple. En outre, la solution utilisée renferme avantageusement, pour éviter notamment la formation de mousses et améliorer le lavage du chlore gazeux, au moins un thiosulfate. Sur la figure, la soude circule puis est recyclée après utilisation (et purge éventuellement ) par la ligne (141), la pompe (142) et la conduite (143).

Les gaz ainsi lavés renferment de la soude ou de la potasse, ou tout composé équivalent utilisé au cours du lavage, sous forme de traces, à la place de l'halogène que renfermaient ces gaz à l'entrée de la zone de lavage. Le dispositif ou enceinte de lavage renferme donc une deuxième zone de lavage, également constituée d'un dispositif classique, telle que colonnes à plateaux dans lesquelles les gaz à épurer sont lavés à l'eau sensiblement pure.

Les gaz ainsi épurés sont saturés en eau, ce qui n'est pas gênant ici, puisque ces gaz doivent de toute façon traverser au moins une zone de séchage dans laquelle les gaz arrivent par une conduite , par exemple à une température de 30°C sous une pression de 4,6 bars.

A la sortie de la boucle de lavage comme indiqué précédemment, les gaz traversent la zone de séchage . On récupère des gaz secs qui atteignent le compresseur généralement unique (152) de la boucle de lavage et recyclage portant la pression des gaz par exemple de 4 à 6,4 bars. Les gaz à leur sortie du compresseur par la ligne (153) sont partagés en deux débits (vanne distributrice (31)). Un premier débit de gaz destiné à la combustion du catalyseur circule par la ligne (32), l'échangeur (132) (destiné à chauffer les gaz secs et lavés par contact indirect avec les effluents gazeux des deux zones de combustion) atteint par la ligne (155), le four (157) et la ligne (102) la première zone de combustion (un appoint d'air peut être fait par la ligne (104)). Un deuxième débit de gaz destiné à la zone de calcination puis à la zone d'oxychloration, circule à partir de la ligne (33) vers le fond de la zone de calcination (116) (un appoint d'air peut être fait par la ligne (28)).

Ainsi le présent perfectionnement concerne un procédé de régénération d'un catalyseur de réformage ou de production d'hydrocarbures aromatiques en présence d'un catalyseur renfermant un support, au moins un métal noble de la famille du platine et du chlore, le procédé étant caractérisé en ce que dans la zone de régénération, le catalyseur traverse successivement deux zones de combustion à lit mobile radial ; une zone d'oxychloration à lit mobile axial et une zone de calcination à lit mobile axial, les gaz soutirés des zones de combustion étant mélangés aux gaz soutirés de la zone d'oxychloration, ces derniers provenant eux-mêmes de la zone de calcination, le mélange ainsi obtenu étant envoyé dans une zone de lavage et dans une zone de séchage à l'issue de laquelle les gaz traversent une zone de compression, et en ce que ensuite une partie des gaz lavés et séchés est chauffée par contact indirect avec le mélange des gaz soutirés des zones de combustion et est envoyée vers la première zone de combustion traversée par le catalyseur, en ce que une autre partie des gaz lavés et séchés est additionnée d'air d'appoint (ou gaz équivalent) puis est chauffée par contact indirect avec les effluents gazeux soutirés des zones de calcination et de la zone d'oxychloration et est envoyée vers la zone de calcination, en ce que un appoint d'air ou d'un gaz équivalent est envoyé dans la deuxième zone de combustion et en ce que un gaz contenant du chlore ou un composé chloré est envoyé dans la zone d'oxychloration.

La présente invention concerne aussi l'appareillage correspondant d'une part au procédé de réformage et d'autre part à une boucle de régénération particulière, associée à la redistribution vers les zones de régénération, à savoir vers les zones de combustion, d'oxychloration et de calcination.

Ainsi la présente invention concerne également un appareil çomportant en combinaison une enceinte de régénération d'un catalyseur et des moyens d'une part pour le lavage des gaz soutirés de l'enceinte de régénération et d'autre part pour la redistribution dans la zone de régénération des gaz récupérés après lavage, caractérisé en ce que la zone de régénération comporte :
- deux zones de combustion disposées en série (101) et (105) radiales avec la circulation en lit mobile de catalyseur,
- une conduite d'admission (102) de gaz à la partie supérieure de la première zone de combustion (101),
- des moyens (108) d'évacuation de gaz à la partie inférieure de la deuxième zone de combustion (105),
- une zone d'oxychloration (107) axiale avec circulation en lit mobile de catalyseur,
- une conduite (114) pour l'envoi de chlore ou d'un composé chloré, à la partie supérieure de la zone d'oxychloration.
- une conduite de soutirage (111) de gaz à la partie inférieure de la zone (107) d'oxychloration,
- une zone (116) de calcination, axiale, avec circulation à lit mobile de catalyseur,
- une conduite d'admission (136) d'un gaz à la partie inférieure de la zone (116) de calcination,
- à la partie inférieure de ladite zone de calcination, au moins une jambe (122) de soutirage de catalyseur,
et en ce que les moyens de lavage et de redistribution des gaz utilisés dans l'enceinte de régénération comportent :
- une conduite (139) dans laquelle sont mélangés d'une part les gaz en provenance de la conduite (108) d'évacuation des gaz de la zone de combustion (105) et d'autre part les gaz en provenance par la conduite (111) de la zone d'oxychloration (107), au moins un échangeur (132) pour effectuer le refroidissement des gaz de la condujite (108),
- un aéroréfrigérant (137) pour refroidir les gaz en provenance de l'échangeur (132),
- une zone de lavage (147) du mélange des effluents gazeux du régénérateur,
- une zone de séchage (150-a) des gaz soutirés de la zone de lavage (147),
- un compresseur (152) pour compresser les gaz en provenance de la zone de lavage (147) et de séchage (150-a),
- un dispositif (31) de séparation en deux courants des gaz soutirés du compresseur (152),
- le dit-échangeur (132) pour chauffer une partie des gaz en provenance du compresseur (152),
- une conduite (155) de soutirage de l'échangeur (132) des gaz ainsi chauffés pour alimenter la conduite (102) d'alimentation en gaz de la partie supérieure de la première dite zone de combustion (101) de l'enceinte de régénération),
- des conduites (33) et (44) pour la circulation d'une autre partie des gaz en provenance par le dispositif (31) du compresseur (152) aux fins d'alimentation en gaz vers la conduite (136) de la partie inférieure de la dite-zone de calcination (après passage des gaz de la conduite (44) à travers le dit-échangeur (119) en vue de chauffer ces gaz par contact indirect avec les effluents gazeux en provenance par la conduite (111) de la zone d'oxychloration (107)).

L'appareil permet d'effectuer la régénération d'un catalyseur soutiré en continu d'une unité de conversion d'hydrocarbures. Dans le régénérateur, le catalyseur circule par gravité et sous contrôle de débit, à travers les zones de régénération.

L'appareil est agencé de façon à ce que l'on puisse effectuer successivement :
- le préchauffage du catalyseur sous atmosphère de gaz inerte pour le porter à une température adéquate pour la combustion du coke,
- la répartition du catalyseur grâce à une série de tuyauteries qui permettent une bonne alimentation de la première zone annulaire (101),
- le brûlage partiel du coke (de 50 à 90 %) grâce à un débit de gaz de régénération circulant à travers le lit annulaire formée de deux grilles concentriques,
- l'élimination complète du coke par le passage du catalyseur dans une deuxième zone annulaire (108) de combustion où le gaz de régénération est le même que celui utilisé dans la zone précédente, chauffée par la chaleur de réaction produite par le brûlage du coke, dans lequel on injecte de l'air pressurisé sous contrôle de débit,
- l'oxychloration du catalyseur extrait de la précédente zone par un ensemble de tuyauteries alimentant un lit radial à co-courant avec un débit contrôlé en % d'oxygène, température, teneur en eau et en agent chlorant,
- la calcination du catalyseur dans un lit axial à contre-courant par un débit de gaz séché, mélange de gaz recyclé et d'air comprimé, qui servira ultérieurement dans la zone d'oxychloration.

A l'issue de la régénération, le catalyseur circule ensuite dans une trémie balayée par du gaz inerte permettant l'élimination des traces d'O₂, trémie qui alimente en continu un pot de remontée du catalyseur par transport pneumatique, pot qui permet un contrôle précis du débit de catalyseur à travers le ballon de régénération.

## Revendications

1. Procédé de régénération d'un catalyseur de réformage ou de production d'hydrocarbures aromatiques en présence d'un catalyseur renfermant un support. au moins un métal noble de la famille du platine et du chlore, dans au-moins deux réacteurs en série à travers lesquels le catalyseur et la charge circulent successivement, la pression dans le premier réacteur traversé par le catalyseur et par la charge étant comprise entre 3 et 8 bars, la pression dans le dernier réacteur étant comprise entre 2 et 6 bars, procédé dans lequel le catalyseur usé chemine progressivement de haut en bas dans une enceinte de régénération où il rencontre successivement deux zones à lit mobile de combustion, le catalyseur étant traité par un gaz de combustion à base d'un gaz interte renfermant 0,01 à 1% d'oxygène, ce gaz de combustion provenant d'une zone de lavage définie ci-dessous; une zone à lit mobile d'oxychloration dans laquelle le catalyseur est traité par un gaz à base d'un composé choisi dans le groupe constitué par le chlore et les composés chlorés, à une température comprise entre 350 et 550°C, et les gaz sont évacués de la zone d'oxychloration en vue d'atteindre une boucle de lavage commune à tous les effluents gazeux de l'enceinte de régénération; une zone de calcination où le catalyseur est traité entre 350 et 550°C par au moins une partie des gaz en provenance de la boucle de lavage et d'une zone de séchage, avec un appoint éventuel d'air frais et de façon à ce que les gaz introduits dans la zone de calcination renferment de 1 à 10% d'oxygène en volume, procédé caractérisé en ce que,
(a) le catalyseur provenant du second réacteur est mis, dans un gaz, en équilibre de pression avec la zone de régénération fonctionnant entre 3 et 8 bars,
(b) dans la première zone radiale de combustion, le catalyseur est traité sous une pression de 3 à 8 bars sensiblement égale à celle qui règne dans le dit premier réacteur, à une température comprise entre 350 et 450 °C, ledit gaz de combustion circulant à co-courant du catalyseur
(c) dans la deuxième zone radiale de combustion, le catalyseur est traité sous une pression de 3 à 8 bars sensiblement égale à celle qui règne dans le dit premier réacteur à une température de 450 à 490°C, en présence des gaz en provenance de la première zone de combustion et en présence d'un gaz inerte d'appoint renfermant jusqu'à 20 % en volume d'oxygène de façon à ce que le catalyseur soit au contact d'un gaz renfermant 0,01 à 1 % d'oxygène en volume, ces gaz circulant à co-courant du catalyseur.
(d) les gaz de brûlage sont évacués de la deuxième zone de combustion et sont envoyés vers une boucle de lavage après avoir été préalablement mélangés aux gaz soutirés de la zone d'oxychloration et de la zone de calcination.
(e) dans la zone axiale d'oxychloration, le catalyseur est traité à co-courant par un mélange d'un gaz en provenance de la zone de calcination et dudit gaz chloré pendant 30 à 60 mm le dit mélange formant un gaz d'oxychloration renfermant 4 à 10 % en volume d'oxygène, sous une pression de 3 à 8 bars,
(f) dans la zone axiale de calcination, le catalyseur est traité pendant 45 à 80 mm à contre-courant entre 350 et 550 °C sous une pression comprise entre 3 et 8 bars, d'une partie des gaz en provenance de la boucle de lavage et d'une zone de séchage, ne renfermant pas plus de 100ppm d'eau
(g) l'autre partie des gaz en provenance de la boucle de lavage étant utilisée dans l'étape (a) comme gaz de combustion.

2. Procédé selon la revendication 1 dans lequel, au cours de l'étape (e), la teneur en oxygène en volume est comprise entre 5 et 7 % avec une teneur en eau inférieure à 50 p.p.m.

3. Procédé selon l'une des revendications 1 à 2 dans lequel au cours de l'étape (c) le gaz d'oxychloration renferme 500 à 7 000 p.p.m d'eau.

4. Procédé selon la revendication 3 dans lequel la teneur en vapeur d'eau est comprise entre 1 000 et 3 000 p.p.m.

5. Procédé selon l'une des revendications 1 à 4 de régénération d'un catalyseur de réformage ou de production d'hydrocarbures aromatiques en présence d'un catalyseur renfermant un support, au moins un métal noble de la famille du platine et du chlore, le procédé étant caractérisé en ce que dans la zone de régénération, le catalyseur traverse successivement deux zones de combustion à lit mobile radial ; une zone d'oxychloration à lit mobile axial et une zone de calcination à lit mobile axial, les gaz soutirés des zones de combustion étant mélangés aux gaz soutirés de la zone d'oxychloration, ces derniers provenant eux-mêmes de la zone de calcination, le mélange ainsi obtenu étant envoyé dans une zone de lavage et dans une zone de séchage à l'issue de laquelle les gaz traversent une zone de compression, et en ce que ensuite une partie des gaz lavés et séchés est chauffée par contact indirect avec le mélange des gaz soutirés des zones de combustion et est envoyée vers la première zone de combustion traversée par le catalyseur, en ce que une autre partie des gaz lavés et séchés est additionnée d'air d'appoint (ou gaz équivalent) puis est chauffée par contact indirect avec les effluents gazeux soutirés des zones de calcination et de la zone d'oxychloration et est envoyée vers la zone de calcination, en ce que un appoint d'air ou d'un gaz équivalent est envoyé dans la deuxième zone de conbustion et en ce que un gaz contenant du chlore ou un composé chloré est envoyé dans la zone d'oxychloration.

6. Appareil pour la mise en oeuvre du procédé selon l'une des revendications 1 à 5, comportant en combinaison une enceinte de régénération d'un catalyseur et des moyens d'une pat pour le lavage des gaz soutirés de l'enceinte de régénération et d'autre part pour la redistribution dans ta zone de régénération des gaz récupérés après lavage, caractérisé en ce que la zone de régénération comporte :
- deux zones de combustion disposée en série (101) et (105) radiales avec la circulation en lit mobile de catalyseur.
- une conduite d'admission (102) de gaz à la partie supérieure de la première zone de combustion (101),
- des moyens (108) d'évacuation de gaz à la partie inférieure de la deuxième zone de combustion (105),
- une zone d'oxychloration (107) axiale avec circulation en lit mobile de catalyseur,
- une conduite (114) pour l'envoi de chlore ou d'un composé chloré, à la partie supérieure de la zone d'oxychloration,
- une conduite de soutirage (111) de gaz à la partie inférieure de la zone (107) d'oxychloration,
- une zone (116) de calcination, axiale, avec circulation à lit mobile de catalyseur,
- une conduite d'admission (136) d'un gaz à la partie inférieure de la zone (116) de calcination,
- à la partie inférieure de la dite zone de calcination, au moins une jambe (122) de soutirage de catalyseur,
et en ce que les moyens de lavage et de redistribution des gaz utilisés dans l'enceinte de régénération comportent :
- une conduite (139) dans laquelle sont mélangés d'une part les gaz en provenance de la conduite (108) d'évacuation des gaz de la zone de combustion (105) et d'autre part les gaz en provenance par la conduite (111) de la zone d'oxychloration (107), au moins un échangeur (132) pour effectuer le refroidissement des gaz de la condujite (108),
- un aéroréfrigérant (137) pour refroidir les gaz en provenance de l'échangeur (132),
- une zone de lavage (147) du mélange des effluents gazeux du régénérateur,
- une zone de séchage (150-a) des gaz soutirés de la zone de lavage (147),
- un compresseur (152) pour compresser les gaz en provenance de la zone de lavage (147) et de séchage (150-a),
- un dispositif (31) de séparation en deux courants des gaz soutirés du compresseur (152),
- le dit échangeur (132) pour chauffer une partie des gaz en provenance du compressseur (152),
- une conduite (155) de soutirage de l'échangeur (132) des gaz ainsi chauffés pour alimenter la conduite (102) d'alimentation en gaz de la partie supérieure de la première dite zone de combustion (101) de l'enceinte de régénération),
- des conduites (33) et (44) pour la circulation d'une autre partie des gaz en provenance par le dispositif (31) du compresseur (152) aux fins d'alimentation en gaz vert la conduite (136) de la partie inférieure de la dite-zone de calcination (après passage des gaz de la conduite (44) à travers le dit-échangeur (119) en vue de chauffer ces gaz par contact indirect avec les effluents gazeux en provenance par la conduite (111) de la zone d'oxychloration (107).

## Claims

1. A process for the regeneration of a catalyst for reforming or for the production of aromatic hydrocarbons in the presence of a catalyst comprising a support, at least one noble metal from the family of platinum and chlorine, in at least two reactors in series through which the catalyst and the charge successively circulate, the pressure in the first reactor through which the catalyst and the charge pass being between 3 and 8 bars, the pressure in the last reactor being between 2 and 6 bars, in which process the exhausted catalyst progressively moves downwardly in a regeneration chamber in which it successively encounters two moving bed combustion zones, the catalyst being treated by a combustion gas based on an inert gas containing 0.01 to 1% oxygen, this combustion gas coming from a washing zone defined hereinbelow; a moving bed oxychlorination zone in which the catalyst is treated with a gas with a base of a compound selected from the group constituted by chorine and chlorinated compounds at a temperature of between 350 and 550°C, and the gases are discharged from the oxychlorination zone in order to reach a common washing loop for all the gaseous effluents of the regeneration chamber; a calcination zone where the catalyst is treated at between 350 and 550°C by at least part of the gases coming from the washing loop and a drying zone, with a possible make-up amount of fresh air, and in such a way that the gases introduced into the calcination zone contain between 1 and 10% oxygen by volume, which process is characterised in that
(a) the catalyst coming from the second reactor is placed, in a flooding chamber, in a pressure equilibrium with the regeneration zone which operates at between 3 and 8 bars,
(b) in the first radial combustion zone the catalyst is treated under a pressure of from 3 to 8 bars which is substantially equal to that which obtains in said first reactor, at a temperature of between 350 and 450°C, said combustion gas circulating in co-flow relationship with the catalyst.
(c) in the second radial combustion zone the catalyst is treated under a pressure of from 3 to 8 bars which is substantially equal to that which obtains in said first reactor, at a temperature of between 450 and 490°C, in the presence of the gases from the first combustion zone and in the presence of an inert make-up gas containing up to 20% by volume of oxygen so that the catalyst is in contact with a gas containing from 0.01 to 1% by volume of oxygen, said gases circulating in co-flow relationship with the catalyst,
(d) the burning gases are discharged from the second combustion zone and are passed to a washing loop after having been previously mixed with the gases drawn off from the oxychlorination zone and the calcination zone,
(e) in the axial oxychlorination zone the catalyst is treated in co-flow relationship by a mixture of a gas from the calcination zone and of said chlorinated gas for 30 to 60 minutes, said mixture forming an oxychlorination gas containing 4 to 10% by volume of oxygen, at a pressure of from 3 to 8 bars,
(f) in the axial calcination zone the catalyst is treated for 45 to 80 minutes in counter-flow relationship at between 350 and 550°C under a pressure of between 3 and 8 bars by part of the gases from the washing loop and a drying zone, not containing more than 100 ppm of water.
(g) the other part of the gases from the washing loop being used in step (a) as a combustion gas.

2. A process according to Claim 1, wherein, in the course of step (e), the amount of oxygen by volume is between 5 and 7% with a water content of less than 50 ppm.

3. A process according to one of Claims 1 to 2, wherein, in the course of step (c), the oxychlorination gas contains from 500 to 7,000 ppm of water.

4. A process according to Claim 3, wherein the water vapour content is between 1,000 and 3,000 ppm.

5. A process according to one of Claims 1 to 4 for the regeneration of a catalyst for reforming or for the production of aromatic hydrocarbons in the presence of a catalyst comprising a support, at least one noble metal from the family of platinum and chlorine, the process being characterised in that in the regeneration zone the catalyst successively passes through two combustion zones with a radial moving bed; an oxychlorination zone with an axial moving bed and an axial calcination zone with an axial moving bed, the gases drawn off from the combustion zones being mixed with the gases drawn off from the oxychlorination zone, the latter themselves coming from the calcination zone, the resulting mixture being passed into a washing zone and into a drying zone, at the discharge from which the gases pass through a compression zone, and in that then a part of the washed and dried gases is heated by indirect contact with the mixture of the gases drawn off from the combustion zones and is passed to the first combustion zone through which the catalyst passes, in that another part of the washed and dried gases has make-up air (or equivalent gas) added thereto and is then heated by indirect contact with the gaseous effluents drawn off from the calcination zones and the oxychlorination zone and is passed to the calcination zone, in that a make-up amount of air or an equivalent gas is passed into the second combustion zone and that a gas containing chlorine or a chlorinated compound is passed into the oxychlorination zone.

6. Apparatus for carrying out the process according to one of Claims 1 to 5, comprising in combination a chamber for regeneration of a catalyst and means, on the one hand, for washing the gases drawn off from the regeneration chamber, and, on the other hand, for re-distribution in the regeneration zone of the gases which are recovered after washing, characterised in that the regeneration zone comprises:
- two radial combustion zones (101) and (105) which are disposed in series, with circulation in a moving bed of catalyst,
- a conduit (102) for the intake of gas in the upper part of the first combustion zone (101),
- means (108) for discharge of gas in the lower part of the second combustion zone (105),
- an axial oxychlorination zone (107) with circulation in a moving bed of catalyst,
- a conduit (114) for passing chlorine or a chlorinated compound to the upper part of the oxychlorination zone,
- a conduit (111) for drawing off gas in the lower part of the oxychlorination zone (107),
- an axial calcination zone (116) with circulation in a moving bed of catalyst,
- a conduit (136) for the intake of a gas in the lower part of the calcination zone (116), and
- in the lower part of said calcination zone at least one leg (122) for drawing off catalyst, and in that the means for washing and re-distribution of the gases used in the regeneration chamber comprise;
- a conduit (139) in which are mixed, on the one hand, the gases coming from the conduit (108) for discharge of the gases from the combustion zone (105), and, on the other hand, the gases coming by way of the conduit (111) from the oxychlorination zone (107), and at least one exchanger (132) for effecting cooling of the gases in the conduit (108),
- an air cooler (137) for cooling the gases from the exchanger (132),
- a zone (147) for washing the mixture of gaseous effluents from the regenerator,
- a zone (150a) for drying the gases drawn off from the washing zone (147),
- a compressor (152) for compressing the gases from the washing zone (147) and the drying zone (150a),
- a device (31) for separating the gases drawn off from the compressor (152) into two flows,
- said exchanger (132) for heating a part of the gases from the compressor (152),
- a conduit (155) for drawing off from the exchanger (132) the gases which are heated in that way to supply the conduit (102) for providing the supply of gas for the upper part of said first combustion zone (101) of the regeneration chamber, and
- conduits (33) and (44) for circulating another part of the gases coming by way of the device (31) from the compressor (152) for the purposes of supplying gas to the conduit (136) of the lower part of said calcination zone (after the gases of the conduit (44) have passed through said exchanger (119) for heating of said gases by indirect contact with the gaseous effluents coming by way of the conduit (111) from the oxychlorination zone (107).

## Patentansprüche

1. Verfahren zum Regenerieren eines Reformierungs- oder Produktionskatalysators aromatischer Kohlenwasserstoffe in Anwesenheit eines Katalysators, der einen Träger, wenigstens ein Edelmetall aus der Familie Platin und Chlor umfaßt, in wenigstens zwei in Reihe angeordneten Reaktoren, durch die der Katalysator und die Charge nacheinander zirkulieren, wobei der Druck im ersten vom Katalysator und von der Charge durchsetzten Reaktor zwischen 3 und 8 bar beträgt, der Druck im letzten Reaktor zwischen 2 und 6 bar liegt, Verfahren bei dem der verbrauchte Katalysator allmählich von oben nach unten in einem Regenerierungsraum wandert, wo er nacheinander auf zwei Zonen mit beweglichem Verbrennungsbett trifft, wobei der Katalysator durch ein Verbrennungsgas auf der Basis eines in 0,01 bis 1 % Sauerstoff einschließenden Inertgases behandelt wird, dieses Verbrennungsgas aus einer unten definierten Waschzone stammt; eine Zone mit beweglichem Oxichlorierungsbett, in dem der Katalysator durch ein Gas auf der Basis einer Verbindung behandelt wird, die gewählt ist aus der Gruppe, gebildet durch Chlor und die chlorhaltigen Verbindungen, bei einer Temperatur zwischen 350 und 550°C und die Gase aus der Oxichlorierungszone abgezogen werden, um eine Waschschleife zu erreichen, die sämtlichen gasförmigen Abströmen aus dem Regenerierungsraum gemeinsam ist; eine Kalzinierungszone, wo der Katalysator zwischen 350 und 550°C durch wenigstens einen Teil der Gase, die aus der Waschschleife und einer Trockenzone stammen, mit einem Zusatz von Frischluft und derart behandelt wird, daß die in die Kalzinierungszone eingeführten Gase 1 bis 10 Vol.% Sauerstoff umfassen; Verfahren, dadurch gekennzeichnet, daß
(a) der aus dem zweiten Reaktor stammende Katalysator in einer Schleusenkammer ins Druckgleichgewicht mit der zwischen 3 und 8 bar betriebenen Regenerierungszone gebracht wird,
(b) in der ersten radialen Verbrennungszone der Katalysator unter einem Druck von 3 bis 8 bar im wesentlichen gleich dem herrschenden, in diesem ersten Reaktor bei einer Temperatur zwischen 350 und 450°C behandelt wird, wobei dieses Verbrennungsgas im Gleichstrom zum Katalysator strömt,
(c) in der zweiten radialen Verbrennungszone der Katalysator unter einem Druck von 3 bis 8 bar, der im wesentlichen gleich dem, der in diesem ersten Reaktor herrscht, ist, bei einer Temperatur von 450 bis 490°C, in Anwesenheit der aus der ersten Verbrennungszone stammenden Gase und in Anwesenheit eines Zusatzinertgases behandelt wird, das bis zu 20 Vol.% Sauerstoff einschließt, derart, daß der Katalysator in Kontakt mit einem Gas kommt, das 0,01 bis 1 Vol.% Sauerstoff enthält, wobei diese Gase im Gleichstrom zum Katalysator zirkulieren,
(d) die Verbrennungsgase aus der zweiten Verbrennungszone abgezogen und gegen eine Waschschleife geführt werden, nachdem sie vorher mit den aus der Oxichlorierungszone und der Kalzinierungszone abgezogenen Gase gemischt wurden,
(e) in der axialen Oxichlorierungszone der Katalysator im Gleichstrom durch ein Gemisch eines aus der Kalzinierungszone und aus diesem cholierten Gas stammenden Gas 30 bis 60 Minuten lang behandelt wird, wobei dieses Gemisch ein Oxichlorierungsgas bildet, das 4 bis 10 Vol.% Sauerstoff unter einem Druck von 3 bis 8 bar einschließt,
(f) in der axialen Kalzinierungszone der Katalysator 45 bis 80 Minuten lang im Gegenstrom zwischen 350 und 550°C unter einem Druck zwischen 3 und 8 bar eines Teils der Gase behandelt wird, die aus der Waschschleife und einer Trockenzone stammen und nicht mehr als 100 ppm Wasser aufweisen, und
(g) der andere Teil, der aus der Waschschleife stammenden Gase in der Stufe (a) als Verbrennungsgas verwendet wird.

2. Verfahren nach Anspruch 1, bei dem während der Stufe (c) der Sauerstoffvolumengehalt zwischen 5 und 7 % mit einem Wassergehalt unterhalb 50 ppm beträgt.

3. Verfahren nach einem der Ansprüche 1 bis 2, bei dem während der Stufe (c) das Oxichlorierungsgas 500 bis 7000 ppm Wasser einschließt.

4. Verfahren nach Anspruch 3, bei dem der Wasserdampfgehalt zwischen 1000 und 3000 ppm beträgt.

5. Verfahren nach einem der Ansprüche 1 bis 4, zur Regenerierung eines Reformierungs- oder Produktionskatalysators für aromatische Kohlenwasserstoffe in Anwesenheit eines Katalysators, der einen Träger, wenigstens ein Edelmetall aus der Familie Platin und Chlor umfaßt, wobei das Verfahren sich dadurch auszeichnet, daß in der Regenerierungszone der Katalysator durchsetzt:
nacheinander zwei Verbrennungszonen mit beweglichem Radialbett; einer Oxichlorierungszone mit beweglichem Bett und eine axiale Kalzinierungszone mit axialem beweglichem Bett, wobei die aus den Verbrennungszonen abgezogenen Gase mit den Gasen vermischt werden, die aus der Oxichlorierungszone abgezogen werden, wobei diese letzteren selbst aus der Kalzinierungszone stammen, das so erhaltene Gemisch in eine Waschzone und in eine Trockenzone geschickt wird, an deren Ausgang die Gase eine Kompressionszone durchströmen, und daß anschließend ein Teil der gewaschenen und getrockneten Gase durch indirekten Kontakt mit dem Gemisch der abgezogenen Gase aus den Verbrennungszonen erwärmt und gegen eine erste vom Katalysator durchsetzte Verbrennungszone geschickt wird, daß ein anderer Teil der gewaschenen und getrockneten Gase mit einem Luftzusatz (oder äquivalentem Gas) beaufschlagt, dann durch indirekten Kontakt mit den Abströmen erwärmt wird, die aus-den Kalzinierungszonen und der Oxichlorierungszone abgezogen wurden und gegen die Kalzinierungszone geführt wird, daß ein Zusatz an Luft eines äquivalenten Gases in die zweite Verbrennungszone geschickt wird, und daß ein Chlor oder eine chlorierte Verbindung enthaltendes Gas in die Oxichlorierungszone geschickt wird.

6. Apparat zur Durchführung des Verfahrens nach einem der Ansprüche 1 bis 5, in Kombination umfassend:
einen Regenerierungsraum für einen Katalysator sowie Mittel einerseits zum Waschen der aus dem Regenerierungsraum abgezogenen Gase und andererseits zur Wiederverteilung in der Regenerierungszone der nach dem Waschen rückgewonnen Gase, dadurch gekennzeichnet, daß die Regenerierungszone umfaßt,
· zwei in Reihe angeordnete radiale Verbrennungszonen (101) und (105) mit Katalysatorzirkulation im beweglichen Bett,
· eine Zuführungsleitung (102) der Gase zum oberen Teil der ersten Verbrennungszone (101),
· Mittel, zum Abziehen der Gase im unteren Teil der zweiten Verbrennungszone (105),
· eine axiale Oxichlorierungszone (107) mit Katalysatorzirkulation im beweglichen Bett,
· eine Leitung (114) um Chlor oder eine chlorierte Verbindung zum oberen Teil der Oxichlorierungszone zu schicken,
· eine Leitung (111) zum Abziehen von Gasen im unteren Teil der Oxichlorierungszone (107),
· eine axiale Kalzinierungszone (116) mit Zirkulation im beweglichen Katalysatorbett,
· eine Zone (136) zur Zuführung eines Gases in den unteren Teil der Kalzinierungszone (116),
· im unteren Teil dieser Kalzinierungszone wenigstens eine Schenkelausbildung (122) zum Abziehen von Katalysator, und daß die Wasch- und Wiederverteilungsmittel der im Regenerierungsraum verwendeten Gase umfassen:
· eine Leitung (139), in der einerseits die aus der Leitung (108) zum Abzug der Gase aus der Verbrennungszone (105) stammenden Gase und andererseits die Gase gemischt werden, die aus der Leitung (111) der Oxichlorierungszone (107) stammen, mit wenigstens einem Austauscher (132) zur Durchführung der Kühlung der Gase der Leitung (108),
· einen Luftkühler (137) zum Kühlen der aus dem Austauscher (132) kommenden Gase,
· eine Zone (147) zum waschen des Gemisches der gasförmigen Abströme aus dem Regenerator,
· eine Zone (150a) zum Trocknen der aus der Waschzone (147) abgezogenen Gase,
· einen Kompressor (152) zum Verdichten der aus der Wasch- (147) und Trockenzone (150a) stammenden Gase,
· eine Vorrichtung (31) zum Trennen der aus dem Kompressor (152) abgezogenen Gase in zwei Ströme, wobei
· diesen Austauscher (132) zum Erwärmen eines Teils, der aus dem Kompressor (152) stammenden Gase,
· eine Leitung (155) zum Abziehen der so erwärmten Gase aus dem Austauscher (132), um die Leitung (102) mit Gas aus dem oberen Teil dieser ersten Verbrennungszone (101) des Regenerierungsraumes zu beaufschlagen.
· Leitungen (33) und (44) für die Zirkulation eines anderen Teils der über die Vorrichtung (31) des dem Kompressor (152) stammenden Gase, gegen die Leitung (136) den unteren Teil dieser Kalzinierungszone zu beaufschlagen (nach Durchgang der Gase aus der Leitung (44) durch diesen Austauscher (119), um diese Gase durch indirekten Kontakt mit dem aus der Oxichlorierungszone (107) über die Leitung (111) kommenden Abströmen zu erwärmen).
